# EUROPEAN PATENT SPECIFICATION

(11) **EP 1 384 627 B1**
(45) Date of publication and mention of the grant of the patent: **07.12.2005**
(21) Application number: 03016905.6
(22) Date of filing: 24.07.2003
(51) Int. Cl.: B60R 16/02

(54) **Vehicle engine electronic central control unit, particularly for an industrial vehicle**
Elektronische zentrale Kraftfahrzeugmotorsteuereinheit, insbesondere für ein Nutzfahrzeug
Unité de commande centrale électronique pour moteur de véhicule, particulièrement pour un véhicule industriel

(30) Priority: 26.07.2002 IT TO20020675
(43) Date of publication of application: 28.01.2004
(73) Proprietor: VEAM S.r.L., 20121 Milano (IT)
(72) Inventor: Boarolo, Claudio, 20017 Rho (IT)
(74) Representative: Cerbaro, Elena

(56) References cited:
- EP-A- 0 697 807
- DE-C- 19 709 243
- US-A- 4 691 667
- US-A- 5 253 143
- US-A- 5 443 550
- US-A- 5 473 109

## Description

The present invention relates to a vehicle engine electronic central control unit, particularly for an industrial vehicle.

A vehicle engine electronic central control unit according to the preamble of claim 1 is known from US 4,691,667.

As is known, electronic central control units comprise a number of digital internal electronic circuits, which receive information signals measured on the engine/vehicle, and supply engine control signals, e.g. for controlling the fuel injection system, variable-geometry turbosupercharger, engine brake assembly, etc.

The output signals are transmitted over electrical cables, which contribute in producing electromagnetic fields, which are added to the electromagnetic fields produced directly by operation of the internal electronic circuits, thus resulting in electromagnetic noise, which in turn is added to other electromagnetic noise inside the vehicle, e.g. produced by operation of the engine and/or related electrical members.

In some, e.g. military, applications, a need is felt to limit the electromagnetic noise produced by the vehicle engine electronic central control unit, to reduce the total of amount of electromagnetic noise on the vehicle.

It is an object of the present invention to provide a vehicle engine electronic central control unit designed to minimize electromagnetic noise emission.

According to the present invention, there is provided an engine electronic central control unit as claimed in Claim 1.

A preferred, non-limiting embodiment of the invention will be described by way of example with reference to the accompanying drawings, in which:
Figure 1 shows a top plan view of a vehicle engine electronic central control unit, particularly for an industrial vehicle, with the cover removed to show the internal component parts;
Figure 2 shows a side view of the Figure 1 electronic central control unit with the cover on;
Figure 3 shows a larger-scale view of a detail of the Figure 1 central control unit;
Figures 3a, 3b and 3c show larger-scale views of further details of the Figure 1 central control unit;
Figure 4 shows the result of tests carried out on the central control unit according to the present invention.

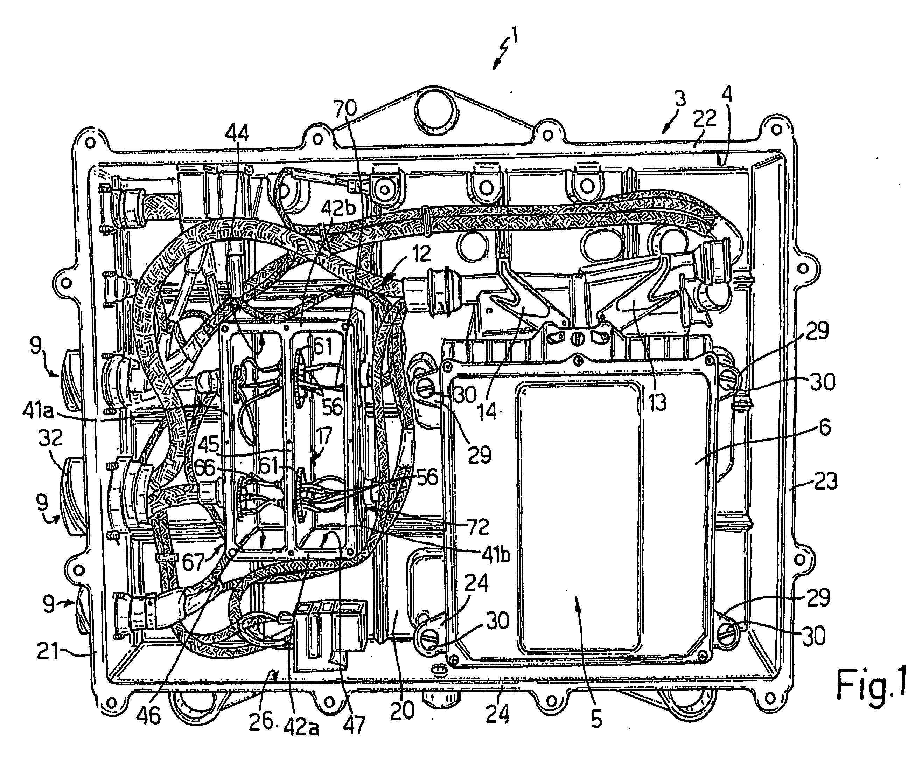

Number 1 in Figure 1 indicates as a whole a vehicle engine electronic central control unit, particularly for an industrial vehicle.

Central control unit 1 comprises:
- an outer casing 3 made of metal (in particular, an aluminium alloy casting) and defining a parallelepiped-shaped inner cavity 4;
- a diesel engine electronic control unit (EDC) 5 housed inside a shielded casing 6 in turn housed inside inner cavity 4 and fixed firmly to casing 3;
- a number of electrical through connectors 9 fitted to outer casing 3;
- shielded electrical cables 12 extending between electrical connectors 9 fitted to the casing, and input and output connectors 13 and 14 connected to respective input and output terminals of engine electronic control unit 5; and
- filters 17 housed inside inner cavity 4, fixed firmly to outer casing 3, and interposed electrically between at least some of the output terminals of diesel engine electronic control unit 5 and at least some of connectors 9.

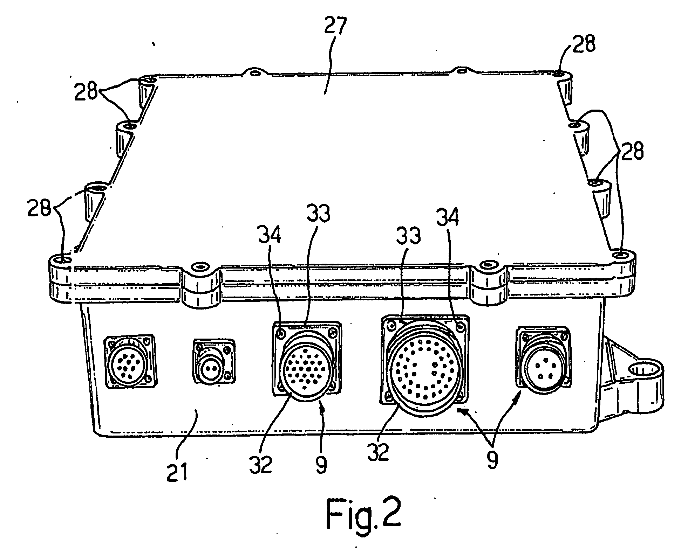

More specifically, outer casing 3 is substantially parallelepiped-shaped, and comprises a rectangular bottom wall 20, and four integral rectangular lateral walls 21, 22, 23, 24 perpendicular to, and extending along respective edges of, rectangular bottom wall 20. The free edges of lateral walls 21, 22, 23, 24 define a rectangular access opening 26 closed by a flat rectangular metal cover 27 (Figure 2), which is fixed to walls 21, 22, 23, 24 by screws 28 for easy assembly/removal to/from outer casing 3.

Casing 3 therefore comprises walls 20, 21, 22, 23, 24 and cover 27, and defines an inner cavity 4, which is completely closed outwards when cover 27 is fitted on (Figure 2).

Walls 20-24 and cover 27 are coated with a special paint.

Shielded casing 6 of electronic unit 5 is parallelepiped-shaped, and, at end edges, has appendixes 29 with through holes for screws 30 to connect casing 6 to bottom wall 20.

Electrical connectors 9 are located on the same wall 21 of outer casing 3, and are aligned in a straight direction (Figure 2) parallel to the long edges of rectangular lateral wall 21.

Each (known) through connector 9 comprises a cylindrical contact-holder body 32 which extends through a respective hole in wall 21; and a rectangular base flange 33 fixed to an outer face of wall 21 by means of screws 34.

Filters 17 are fitted to a supporting structure 40 comprising a parallelepiped-shaped box structure, in turn comprising a first pair of facing rectangular walls 41a, 41b perpendicular to and integral with bottom wall 20, and a second pair of facing rectangular walls 42a, 42b also perpendicular to and integral with bottom wall 20. The parallelepiped-shaped box structure defines a parallelepiped-shaped inner cavity 44, across which extends, between walls 42a and 42b, a rectangular partition wall 45 perpendicular to and integral with bottom wall 20. The partition wall therefore defines a first parallelepiped-shaped chamber 46 bounded by partition wall 45, wall 41a, and first portions of walls 42a, 42b; and a second parallelepiped-shaped chamber 47 bounded by partition wall 45, wall 41b, and second portions of walls 42a, 42b.

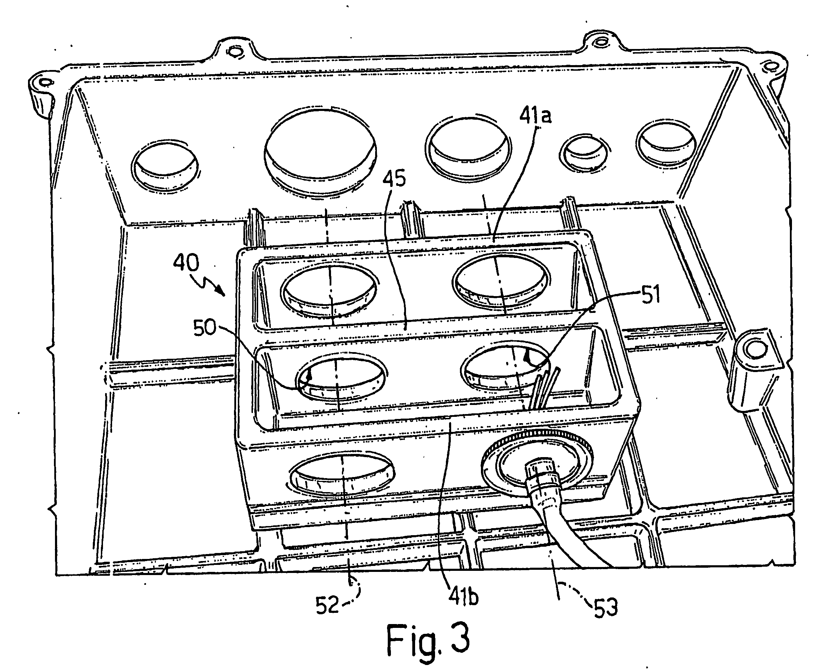

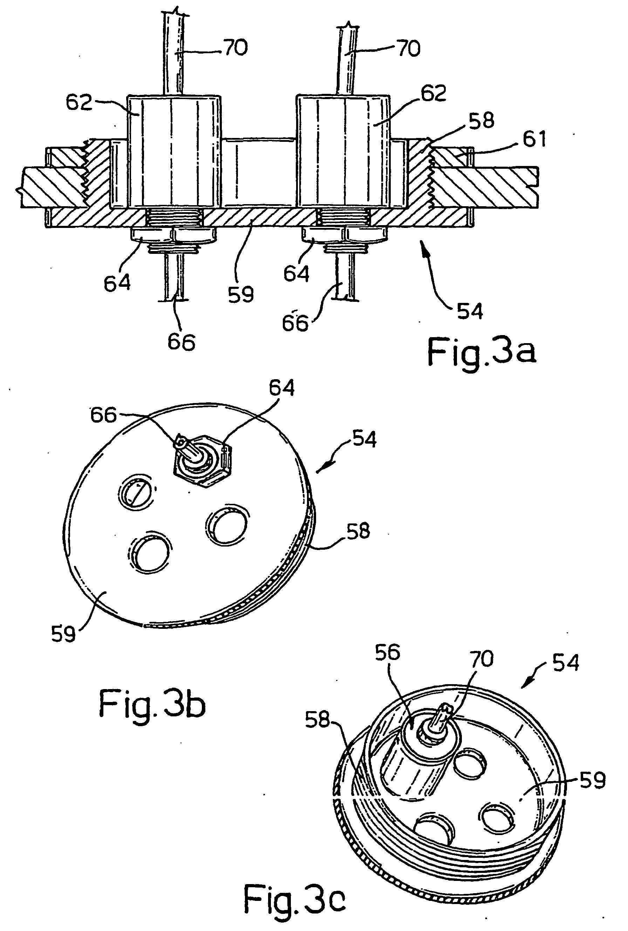

Partition wall 45 (Figures 3 and 3a) comprises a first and second circular through opening 50, 51 coaxial with respective axes 52, 53.

Walls 41a, 41b also comprise respective first and second circular through openings coaxial with axes 52 and 53 and of the same diameter as through openings 50, 51.

Each opening 50, 51 houses a supporting member 54 (Figures 3b, 3c) for a number of through filter members 56 interposed between first and second chamber 46 and 47. Each through filter member 56 (commercial type) preferably defines a P.I. filter.

More specifically, supporting member 54 comprises an externally threaded tubular body 58 (Figure 3a) inserted inside through opening 50, 51; and an integral circular wall 59 crosswise to and larger in diameter than tubular body 58. The annular edges of circular wall 59 are positioned parallel to a first face of rectangular partition wall 45; and a threaded ring 61, fitted to tubular body 58, presses on a second face of rectangular partition wall 45 to connect supporting member 54 firmly to partition wall 45. Circular wall 59 has four through holes located at the corner points of a square; each hole houses a threaded end portion of a cylindrical casing 62 of filter member 56; and cylindrical casing 62 is fixed firmly to circular wall 59 by a nut 64, so that each cylindrical casing 62 of through filter member 56 has a first end facing first chamber 46, and a second end facing second chamber 47. A first electrical conductor 66, housed inside the first chamber, extends from the first end to a base 67 housed inside a hole in wall 41a; a second electrical conductor 70, housed inside second chamber 47, extends from the second end to a base 72 housed inside a hole in wall 41b; and electrical wiring extends from bases 72 and 67 to the output terminals of the electronic engine control unit and to electrical connectors 9.

Through filter members 56 are therefore interposed between first conductors 66 and second conductors 70, which in turn are interposed between the terminals of electrical connectors 9 and the output terminals of electronic unit 5, so that the electric output signals of electronic unit 5 (or at least some of them) are filtered inside supporting structure 40.

Supporting structure 40 also has a metal cover (not shown in Figure 1) fixed to the edges of walls 41a, 41b and 42a, 42b to close chambers 46 and 47.

Filtering the output signals, as described above, inside outer casing 3, which acts as an electromagnetic shield, greatly reduces the electromagnetic noise produced by operation of engine electronic control unit 5.

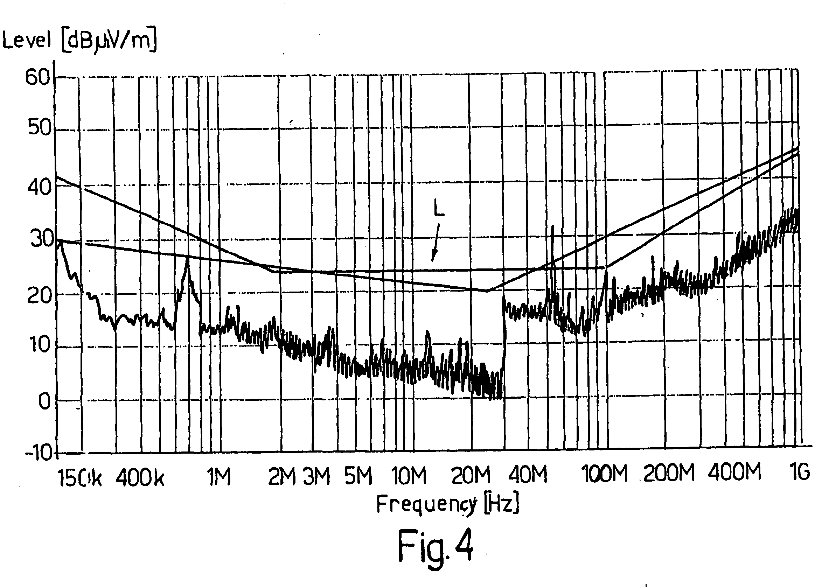

Tests conducted by the Applicant show central control unit 1 maintains a low level of electromagnetic noise over a wide range of frequencies. As shown in the Figure 4 cartesian graph - in which the X axis represents a logarithmic scale of frequencies from 150 kHz to 1 GHz, and the Y axis the electromagnetic noise level in dBµV/m - electromagnetic noise is maintained below a safety level L over substantially the whole frequency range considered.

Clearly, changes may be made to the vehicle engine electronic central control unit, particularly for an industrial vehicle, as described and illustrated herein without, however, departing from the scope of the present invention.

## Claims

1. A vehicle engine electronic central control unit, particularly for an industrial vehicle, comprising:
- an outer casing (3) made of shielding material and defining an inner cavity (4);
- an engine electronic control unit (5) housed in a shielded casing (6) in turn housed in said inner cavity (4) and fixed firmly to said outer casing (3);
- a number of through electrical connectors (9) carried by said outer casing (3);
- shielded electrical wiring (12) extending between said electrical connectors (9) and input and output terminals of said engine electronic control unit (5);
**characterized by**
- filtering means (17) housed in said inner cavity (4) and interposed electrically between at least some of the output terminals of said engine electronic control unit (5) and at least some of said electrical connectors (9).

2. A central control unit as claimed in Claim 1, wherein said outer casing (3) comprises a bottom wall (20), and integral lateral walls (21, 22, 23, 24) extending along respective edges of said bottom wall (20); the free edges of said lateral walls (21, 22, 23, 24) defining an access opening (26) closed by a removable cover (27).

3. A central control unit as claimed in Claim 2, wherein said shielded casing (6) of said engine electronic control unit (5) is fixed firmly (30) to said bottom wall (20).

4. A central control unit as claimed in Claim 2 or 3, wherein said electrical connectors (9) are located on the same lateral wall (21) of said outer casing, and are aligned with one another in a straight direction.

5. A central control unit as claimed in any one of the foregoing Claims, wherein said filtering means comprise through filter members (56) interposed along electrical lines (66, 70) extending between said output terminals of said engine electronic control unit (5) and said electrical connectors (9); said through filter members (56) being carried by supporting means (45) located inside said inner cavity (4).

6. A central control unit as claimed in Claim 5, wherein said filtering means comprise a supporting structure (40) defining internally a first chamber (46) and a second chamber (47) separated from each other by a partition wall (45, 59) defining said supporting means (45) for said through filter members (56).

7. A central control unit as claimed in Claim 6, wherein each through filter member (56) comprises end portions respectively facing the first and second chamber (46, 47).

8. A central control unit as claimed in Claim 6 or 7, wherein the through filter members (56) are carried by a supporting member (54) located inside a through opening (50, 51) formed in said partition wall (45, 59).

9. A central control unit as claimed in Claim 8, wherein the supporting member (54) comprises an externally threaded tubular body (58) inserted inside said through opening (50, 51), and an integral wall (59) crosswise to the tubular body (58) and having radial dimensions greater than the radial dimensions of the tubular body (58); annular edges of said integral wall (59) being positioned parallel to a first face of said partition wall (45); and a threaded member (61), fitted to the tubular body (58), being positioned on a second face of the partition wall (45) to connect the supporting member (54) firmly to the partition wall (45).

10. A central control unit as claimed in Claim 9, wherein said integral wall (59) has a number of through openings housing respective end portions of said through filter members.

11. A central control unit as claimed in Claim 6, wherein said supporting structure (40) is formed integrally on said outer casing.

12. A central control unit as claimed in Claim 6, wherein said supporting structure (40) comprises a parallelepiped-shaped box structure comprising a first pair of facing rectangular walls (41a, 41b) perpendicular to and integral with the bottom wall (20) of the outer casing, and a second pair of facing rectangular walls (42a, 42b) perpendicular to and integral with said bottom wall (20); and the parallelepiped-shaped box structure defines a parallelepiped-shaped inner cavity (44) across which said partition wall (45) extends between one pair of facing walls (42a, 42b).

## Patentansprüche

1. Elektronische zentrale Steuereinheit für einen Kraftfahrzeugmotor, insbesondere eins Nutzfahrzeugs, mit:
- einem äußeren Gehäuse (3), hergestellt aus Abschirmmaterial, das einen inneren Hohlraum (4) definiert;
- einer elektronischen Motorsteuereinheit (5), untergebracht in einem abgeschirmten Gehäuse (6), das wiederum in dem inneren Hohlraum (4) untergebracht und fest an dem äußeren Gehäuse (3) befestigt ist;
- einer Anzahl von elektrischen Durchverbindern (9), gehalten von dem äußeren Gehäuse (3);
- einer abgeschirmten elektrischen Verdrahtung (12), die sich zwischen den elektrischen Verbindern (9) und Eingangs- und Ausgangsanschlüssen der elektronischen Motorsteuereinheit (5) erstreckt;
**gekennzeichnet durch**
- Filtermittel (17), untergebracht in dem inneren Gehäuse (4) und elektrisch zwischen wenigstens manchen der Ausgangsanschlüsse der elektronischen Motorsteuereinheit (5) und wenigstens manchen der elektrischen verbinder (9) angeordnet.

2. Zentrale Steuereinheit nach Anspruch 1, bei der das äußere Gehäuse (3) eine Bodenwand (20) und integrale Seitenwände (21, 22, 23, 24) umfasst, die sich entlang jeweiliger Ränder der Bodenwand (20) erstrecken, wobei die freien Ränder der Seitenwände (21, 22, 23, 24) eine durch eine entfernbare Abdeckung (27) verschlossene Zugangsöffnung (26) definieren.

3. Zentrale Steuereinheit nach Anspruch 2, bei der das abgeschirmte Gehäuse (6) der elektronischen Motorsteuereinheit (5) fest (30) an der Bodenwand (20) befestigt ist.

4. zentrale Steuereinheit nach Anspruch 2 oder 3, bei der die elektrischen verbinder (9) auf der gleichen Seitenwand (21) des äußeren Gehäuses angebracht und miteinander in einer geraden Richtung ausgerichtet sind.

5. Zentrale Steuereinheit nach einem beliebigen der vorhergehenden Ansprüche, bei der die Filtermittel Durchgangsfilterelemente (56) umfassen, die auf elektrischen Leitungen (66, 70) angeordnet sind, die sich zwischen den Ausgangsanschlüssen der elektronischen Motorsteuereinheit (5) und den elektrischen Verbindern (9) erstrecken, wobei die Durchgangsfilterelemente (56) von Trägereinrichtungen (45) gehalten sind, die innerhalb des inneren Hohlraums (4) angeordnet sind.

6. Zentrale Steuereinheit nach Anspruch 5, bei der die Filtermittel eine Trägerstruktur (40) umfassen, die intern eine erste Kammer (46) und eine zweite Kammer (47) definiert, die voneinander durch eine Trennwand (45, 59) getrennt sind, die die Trägereinrichtung (45) für die Durchgangsfilterelemente (56) definiert.

7. zentrale Steuereinheit nach Anspruch 6, bei der jedes Durchgangsfilterelement (56) Endabschnitte aufweist, die jeweils der ersten bzw. zweiten Kammer (46, 47) zugewandt sind.

8. Zentrale Steuereinheit nach Anspruch 6 oder 7, bei der die Durchgangsfilterelemente (46) von einem Trägerelement (54) getragen sind, das in einer Durchgangsöffnung (50, 51) angebracht ist, die in der Trennwand (45, 59) gebildet ist.

9. Zentrale Steuereinheit nach Anspruch 8, bei der das Trägerelement (54) einen rohrförmigen Körper (58) mit Außengewinde, der in die Durchgangsöffnung (50, 51) eingeführt ist, und eine einteilige Wand (59) quer zu dem röhrförmigen Körper (58) mit radialen Abmessungen größer als die radialen Abmessungen des rohrförmigen Körpers (58), wobei ringförmige Wände der einteiligen Wand (59) parallel zu einer ersten Seite der Trennwand (45) positioniert sind, und ein an den rohrförmigen Körper (48) angepasstes Gewindeelement (61) umfasst, das an einer zweiten Seite der Trennwand (45) positioniert ist, um das Trägerelement (54) fest mit der Trennwand (45) zu verbinden.

10. Zentrale Steuereinheit nach Anspruch 9, bei der die einteilige Wand (59) eine Anzahl von Durchgangsöffnungen hat, die jeweils Endabschnitte der Durchgangsfilterelemente aufnehmen.

11. Zentrale Steuereinheit nach Anspruch 6, bei der die Trägerstruktur (40) einteilig an dem äußeren Gehäuse ausgebildet ist.

12. Zentrale Steuereinheit nach Anspruch 6, bei der die Trägerstruktur (40) eine quaderförmige Kastenstruktur umfasst, die ein erstes Paar von gegenüberliegenden rechteckigen Wänden (41a, 41b) senkrecht zu und einteilig mit der Bodenwand (20) des äußeren Gehäuses und ein zweites Paar von gegenüberliegenden rechteckigen Wänden (42a, 42b) senkrecht zu und einteilig mit der Bodenwand (20) umfasst, und die quaderförmige Kastenstruktur einen quaderförmigen inneren Hohlraum (44) definiert, durch den sich die Trennwand (45) zwischen einem Paar von gegenüberliegenden Wänden (42a, 42b) erstreckt.

## Revendications

1. Unité centrale de commande électronique de moteur de véhicule, en particulier pour un véhicule industriel, comportant :
- un boîtier extérieur (3) réalisé en un matériau de blindage et définissant une cavité intérieure (4) ;
- une unité de commande électronique (5) de moteur agencée dans un boîtier blindé (6) à son tour agencé dans ladite cavité intérieure (4) et fixée fermement audit boîtier extérieur (3) ;
- une pluralité de connecteurs électriques traversant (9), portés par ledit boîtier extérieur (3) ; et
- du câblage électrique blindé (12) s'étend entre lesdits connecteurs électriques (9) et des bornes d'entrée et de sortie de ladite unité de commande électronique (5) de moteur ;
**caractérisée en ce que** des moyens de filtrage (17) sont logés dans ladite cavité intérieure (4) et sont interposés électriquement entre au moins une des bornes de sortie de ladite unité de commande électronique (5) de moteur et au moins un des connecteurs électriques (9).

2. Unité centrale de commande selon la revendication 1, **caractérisée en ce que** ledit boîtier extérieur (3) comporte une paroi inférieure (20), et des parois latérales en une seule pièce (21, 22, 23, 24) qui s'étendent le long d'arêtes respectives de ladite paroi inférieure (20) ; les arêtes libres desdites parois latérales (21, 22, 23, 24) définissant une ouverture d'accès (26) fermée par un couvercle escamotable (27).

3. Unité centrale de commande selon la revendication 2, **caractérisée en ce que** ledit boîtier blindé (6) de ladite unité de commande électronique (5) de moteur est fixé fermement (30) à ladite paroi inférieure (20).

4. Unité centrale de commande selon les revendications 2 ou 3, **caractérisée en ce que** lesdits connecteurs électriques (9) sont agencés sur la même paroi latérale (21) dudit boîtier extérieur (3), et sont alignés les uns avec les autres selon une direction rectiligne.

5. Unité centrale de commande selon l'une quelconque des revendications précédentes, **caractérisée en ce que** lesdits moyens de filtrage comportent des éléments de filtrage traversant (56) interposés le long de lignes électrique (66, 70) s'étendant entre lesdites bornes de sorties de ladite unité de commande électronique (5) de moteur et lesdits connecteurs électriques (9) ; lesdits éléments de filtrage traversant (56) étant portés par des moyens de support (45) agencés dans ladite cavité intérieure (4).

6. Unité centrale de commande selon la revendication 5, **caractérisée en ce que** lesdits moyens de filtrage comportent une structure de support (40) définissant intérieurement une première chambre (46) et une seconde chambre (47) séparées l'une de l'autre par une cloison de séparation (45, 59) constituant lesdits moyens de support (45) pour lesdits éléments de filtrage traversant (56).

7. Unité centrale de commande selon la revendication 6, **caractérisée en ce que** chaque élément de filtrage traversant (56) comporte des portions d'extrémité faisant respectivement face à la première et à la seconde chambres (46, 47).

8. Unité centrale de commande selon la revendication 6 ou 7, **caractérisée en ce que** les éléments de filtrage (56) sont portés par un élément de support (54) agencé dans une ouverture débouchant (50, 51) formée dans ladite cloison de séparation (45, 59).

9. Unité centrale de commande selon la revendication 8, **caractérisée en ce que** l'élément de support (54) comporte un corps tubulaire (58) fileté à l'extérieur, inséré dans ladite ouverture (50, 51), et une cloison en une seule pièce (59) transversale au corps tubulaire (58) ayant des dimensions radiales supérieures aux dimensions radiales du corps tubulaire (58) ; les arêtes annulaires de ladite cloison en une seule pièce (59) étant positionnées parallèlement à une première face de ladite cloison de séparation (45) ; et comporte un élément fileté (61), ajusté au corps tubulaire (58), étant positionné sur une seconde face de la cloison de séparation (45) pour relier l'élément de support (54) fermement à la cloison de séparation (45).

10. Unité centrale de commande selon la revendication 9, **caractérisée en ce que** ladite cloison en une seule pièce (59) comporte un nombre d'ouvertures traversantes de logement en relation avec les portions d'extrémité desdits éléments de filtrage.

11. Unité centrale de commande selon la revendication 6, **caractérisée en ce que** la structure de support (40) est formée en une seule pièce sur ledit boîtier extérieur.

12. Unité centrale de commande selon la revendication 6, **caractérisée en ce que** ladite structure de support (40) comporte une structure de boîte en forme de parallélépipède comportant une première paire de parois rectangulaires en vis-à-vis (41a, 41b), perpendiculaires à et en une seule pièce avec la paroi inférieure (20) du boîtier extérieur, et une seconde paire de parois rectangulaires en vis-à-vis (42a, 42b), perpendiculaires à et en une seule pièce avec ladite paroi inférieure (20) ; et **en ce que** la structure de boîte en forme de parallélépipède définit une cavité intérieure (44) en forme de parallélépipède à travers laquelle ladite cloison de séparation (45) s'étend entre une paire de parois en vis-à-vis (42a, 42b).
